# EUROPEAN PATENT SPECIFICATION

(11) **EP 2 953 514 B1**
(45) Date of publication and mention of the grant of the patent: **27.02.2019**
(21) Application number: 13874514.6
(22) Date of filing: 11.03.2013
(51) Int. Cl.: A47L 5/24, A47L 9/28, H02J 7/00

(54) **CHARGING STAND FOR A HANDHELD VACUUM CLEANER**
LADESTÄNDER FÜR EINEN HANDSTAUBSAUGER
SOCLE DE CHARGE POUR ASPIRATEUR PORTABLE

(30) Priority: 05.02.2013 SE 1300089
(43) Date of publication of application: 16.12.2015
(73) Proprietor: Aktiebolaget Electrolux, 105 45 Stockholm (SE)
(72) Inventor: TROBERG, Henrik, SE-141 72 Segeltorp (SE)
(74) Representative: Electrolux Group Patents
(86) International application number: PCT/SE2013/000036
(87) International publication number: WO 2014/123458

(56) References cited:
- GB-A- 2 106 728
- GB-A- 2 275 182
- JP-A- 2003 284 656
- JP-A- 2007 319 447
- JP-A- 2007 319 447
- JP-A- 2012 080 701
- US-A- 4 670 701
- US-A- 4 920 608
- US-A- 5 035 024

## Description

### Field of the invention

The present invention generally relates to the field of charging stands for handheld vacuum cleaners.

### Background of the invention

Handheld vacuum cleaners are a type of portable vacuum cleaners adapted to be manoeuvred by one hand and being powered by a battery. Such handheld vacuum cleaners are suitable for vacuuming tables, furniture or other relatively small surfaces. Handheld vacuum cleaners are relatively small (having a weight of around 1 kg) compared to conventional canister vacuum cleaners or robot vacuum cleaners. Charging stands suitable for such vacuum cleaners are normally rather small, having a size comparable with the size of the handheld vacuum cleaner itself, and are typically adapted to stand on a limited area, such as on a shelf or table in a kitchen or be fastened to a wall in order to make the handheld vacuum cleaner easily accessible for a user. An example of a charging stand for a handheld vacuum cleaner is shown in US4670701. A drawback with such a charging stand is that the stand is limited to stand on a horizontal surface and requires a minimum height of a storage space approximately corresponding to the height of the handheld vacuum cleaner in its upright position.

The document JP 2003 284656 A describes charging stand for a hand-held vacuum cleaner according to the preamble of claim 1.

### Summary of the invention

It would be advantageous to achieve a charging stand for a handheld vacuum cleaner overcoming, or at least alleviating, the above mentioned drawback. In particular, it would be desirable to enable a charging stand for a handheld vacuum cleaner with improved adaptability to different storage requirements.

To better address one or more of these concerns, a charging stand having the features defined in the independent claim is provided. Preferable embodiments are defined in the dependent claims.

According to an aspect, a charging stand for a handheld vacuum cleaner is provided. The charging stand comprises a first part arranged to support the charging stand on a surface, a second part arranged to support the handheld vacuum cleaner, and an electrical contact arranged to electrically connect the handheld vacuum cleaner to a power supply. The first part and the second part are hingedly interconnected. Further, the charging stand comprises locking means arranged to fix the first part relative to the second part.

The present charging stand can be adapted to a storage space, in which the vacuum cleaner is to be charged, or other storage requirements. For example, the stand may support the handheld vacuum cleaner in a substantially horizontal position (i.e. wherein the longitudinal direction of the handheld vacuum cleaner is directed along the surface), which may be advantageous for storage spaces with limited height. Further, the stand may support the handheld vacuum cleaner in a substantial upright position (wherein the longitudinal direction of the handheld vacuum cleaner is directed transverse to the surface), which may be advantageous for storage spaces with limited width or for displaying the handheld vacuum cleaner in a store and/or in a kitchen. Thus, the charging stand has improved adaptability to different storage requirements.

According to an embodiment, the first part may be pivotal relative to the second part between a minimum angel of the first part relative to the second part comprised within an interval of 0° to 30°, preferably 0° to 20°, and even more preferably 0° to 10° (such as around 0°), and a maximum angle of the first part relative to the second part comprised within an interval of 50° to 90°, preferably 60° to 85°, and even more preferably 65° to 80° (such as around 70° or 72°). The present angle interval allows the charging stand to be folded so as to hold the handheld vacuum cleaner in a substantially horizontal position (at the minimum angle) and in an upright (close to vertical) position (at the maximum angle). As the maximum angle is lower than 90°, the risk of the charging stand tipping when the vacuum cleaner is arranged in the stand is reduced. Tipping will occur when the line of gravity (i.e. the imaginary vertical line through the center of mass) of the handheld vacuum cleaner is outside a support area of the charging stand (i.e. the handheld vacuum cleaner will overbalance under such conditions). In this context, the term "support area" refers to a base of support (or area) defined by the boundaries between outer supporting points of a body (such as the charging stand) standing on an underlying surface.

Preferably, the charging stand may be configured so as to disable angles larger than the maximum angle between the first and second parts, thereby reducing the risk of accidentally arranging the charging stand with a larger angle between the first and second parts.

In an embodiment, the locking means may be arranged to lock the second part relative to the first part in at least a first position, in which the first part has a first angle of around 0° to 30°, preferably 0° to 20°, and even more preferably 0° to 10° (such as around 0°) relative to the second part, and a second position, in which the first part has a second angle of around 50° to 90°, preferably 60° to 85°, and even more preferably 65° to 80° (such as around 70° or 72°) relative to the second part. Thus, in case the charging stand is supported on a substantially horizontal surface, in the first position, the charging stand may hold the handheld vacuum cleaner in a substantially horizontal position and in the second position, the charging stand may hold the handheld vacuum cleaner in an upright (close to vertical) position.

According to an embodiment, the locking means may be arranged to lock the second part relative to the first part in one or more intermediate positions between the first and second positions. In the intermediate positions, the angle between the first and second parts may be larger than the first angle and lower than the second angel. With the present embodiment, the number of positioning options is increased and the user may more accurately adjust the charging stand as desired, thereby further improving the adaptability of the charging stand to different storage requirements.

According to an embodiment, the first part may comprise at least one hole for receiving a fastener (such as a screw) for fastening the charging stand to said surface, thereby enabling further storage possibilities for the charging stand and the handheld vacuum cleaner. For example, the charging stand may be mounted to a wall. When the charging stand is mounted to a wall, it may preferably be arranged in the folded position (i.e. in the first position), thereby reducing the risk of the handheld vacuum cleaner falling off the charging stand.

In an embodiment, the second part may comprise at least one hole for receiving a fastener, wherein the at least one hole of the second part is aligned with the at least one hole of the first part, whereby a fastener may extend through both the first and second parts. Hence, the first part may be secured to the second part, whereby the charging stand is secured in a folded position (such as in the above described first position). Relative movement of the first and second parts may thereby be disabled when the charging stand is mounted to the surface (such as a wall) by means of the fastener.

According to an embodiment, the locking means may comprise one or more of a toothed coupling, and a support element having a first end pivotally connected to one of the first part and the second part, and a second end for supporting the other one of the first part and second part. The support element may e.g. be a rod or the like element. The pivotal arrangement of the support element allows arranging the second end of the support element at different positions along (the longitudinal direction) of said other one of the first and second parts. The toothed coupling and/or the support element may allow arrangement of the charging stand in different distinctive positions (such as the first, second and any intermediate positions). Alternatively (or as a complement), the locking means may comprise a friction coupling.

According to an embodiment, the charging stand may further comprise a hook arranged at the second part, wherein the hook is adapted to hold (such as support) the handheld vacuum cleaner at the second part. In particular, the hook may support the handheld vacuum cleaner when the charging stand is arranged to hold the handheld vacuum cleaner in a substantial upright position. Further, the hook facilitates aligning the electrical contact of the handheld vacuum cleaner with the electrical contact of the charging stand. The hook may serve so as to guide the handheld vacuum cleaner to a proper charging position at the charging stand.

According to an embodiment, the hook may be arranged at substantially the same distance from the hinged connection between the first and second part as the electrical connections. The expression "substantially the same distance from the hinged connection" may include any distance differing at most 4 cm and preferably at most 2 cm from the distance between the electrical connections and the hinged connection. For example, the hook may be arranged in proximity to (such as at most 4 cm from) the electrical contact. As the center of mass of the handheld vacuum cleaner usually is in proximity to the electrical contact of the handheld vacuum cleaner (over which the electrical contact of the charging stand is aligned), the present embodiment provides improved stability, as the point of suspension (at the hook) is in proximity to the center of mass of the handheld vacuum cleaner.

The hook and the second part may preferably be molded in a single piece of plastic, thereby facilitating manufacturing of the charging stand.

According to an embodiment, the second part may comprise a sledge adapted to support (such as hold) the handheld vacuum cleaner such that the handheld vacuum cleaner at least partly rests in the sledge. Hence, the sledge facilitates securing the handheld vacuum cleaner at the charging stand. The sledge may preferably be adapted to the shape of the handheld vacuum cleaner to provide an improved support. Preferably, the sledge may be adapted to hold the handheld vacuum cleaner such that the electrical contact of the handheld vacuum cleaner and the electrical contact of the charging stand are aligned.

In an embodiment, the electrical contact may be arranged at a mid portion of the second part. As previously described, the center of mass of the handheld vacuum cleaner usually is in proximity to the electrical contact of the handheld vacuum cleaner (over which the electrical contact of the charging stand is aligned). Hence, the present embodiment provides improved stability, as the center of mass of the handheld vacuum cleaner may be supported at the mid portion of the second part.

According to an embodiment, an end portion of the second part (such as a portion of the second part in proximity to the end of the second part) may be hingedly connected to the first part. Optionally, an end portion of the first part (such as a portion of the first part in proximity to the end of the first part) may be hingedly connected to the second part.

In an embodiment, the charging stand may further comprise a recess (or compartment) formed in the second and/or first part for storing accessory equipment (such as a brush) for the handheld vacuum cleaner. Hence, accessory equipment storage may be integrated in the charging stand, which may help a user to keep track of the accessory equipment.

According to an embodiment, the electrical contact may be integrated in the second part. For example, one or more contact pads may be integrated in the second part.

According to an embodiment, the second part may be adapted to support the handheld vacuum cleaner on a side of the second part facing away from the first part when the first and second part are folded together.

Further objectives of, features of, and advantages with, the present aspects will become apparent when studying the following detailed disclosure, the drawings and the appended claims. Those skilled in the art realize that different features of the present invention can be combined to create embodiments other than those described in the following.

### Brief description of the drawings

The above, as well as additional objects, features and advantages of the present aspects, will be better understood through the following illustrative and non-limiting detailed description of preferred embodiments, with reference to the appended drawings.
Figure 1 shows a charging stand according to an embodiment.
Figure 2 shows an exploded view of the charging stand.
Figure 3 shows a handheld vacuum cleaner mounted in the charging stand, the charging stand being in a first position.
Figure 4 shows the handheld vacuum cleaner mounted in the charging stand, the charging stand being in a second position.
Figure 5 shows the handheld vacuum cleaner mounted in the charging stand when the charging stand is mounted to a wall.

All the figures are schematic, not necessarily to scale, and generally only show parts which are necessary in order to elucidate embodiments of the invention, wherein other parts may be omitted or merely suggested.

### Detailed description of embodiments

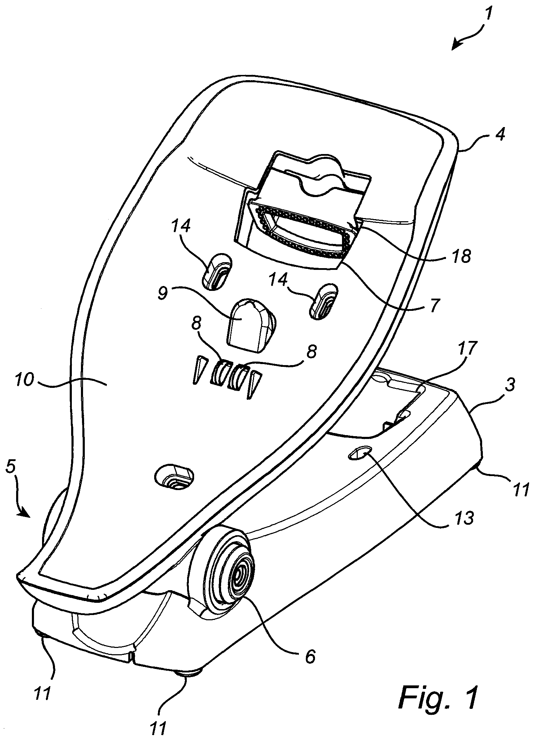

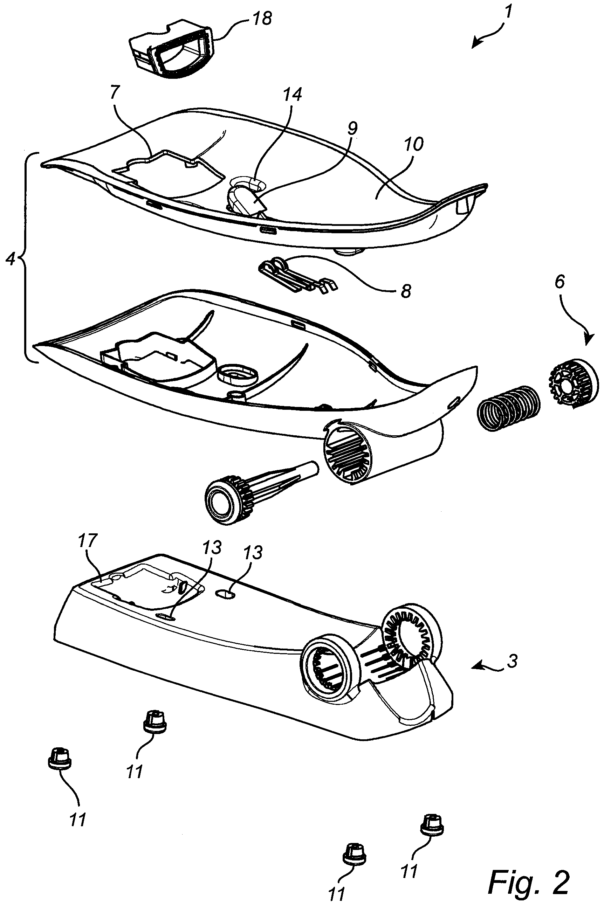

A charging stand for a handheld vacuum cleaner according to an embodiment will be described with reference to Figures 1 and 2. Figure 1 is a perspective view of a charging stand 1 and Figure 2 is an exploded view of the charging stand 1 shown in Figure 1.

The charging stand 1 comprises a first part 3 adapted to support the charging stand on a surface, such as a table, shelf, wall or the like. The charging stand 1 may comprise rubber feets 11 mounted to the lower side of the first part 3, whereby the first part 3 rest on the surface via the rubber feets 11. The first part 3 may have a (slightly) elongated shape and be adapted to extend along the surface when the charging stand 1 is supported on the surface. The charging stand 1 further comprises a second part 4 pivotally (or hingedly) connected to the first part 3 via a hinged connection 5. The first part 3 may be pivotal relative to the second part 4 between a minimum angel of the first part 3 relative to the second part 4 comprised within an interval of 0° to 30°, preferably 0° to 20°, and even more preferably 0° to 10°, and a maximum angle of the first part 3 relative to the second part 4 comprised within an interval of 50° to 90°, preferably 60° to 85°, and even more preferably 65° to 80°. The angles referred to above may be angles of the longitudinal direction of the first part 3 relative to the longitudinal direction of the second part 4.

The second part 4 is adapted to support (or hold) the handheld vacuum cleaner. For this purpose, the second part 4 may be provided with a hook 9, preferably molded in the same piece of material (such as plastic) as the second part 4. The hook 9 may be adapted to suspend the handheld vacuum cleaner to the charging stand 1. Further, the charging stand 1 may comprise a sledge 10 for further supporting the handheld vacuum cleaner. Preferably, at least a portion of the second part 4 may be shaped so as to form the sledge10. For example, the sledge 10 may be (slightly) bowl-shaped and/or have a shape corresponding to (following or matching) the shape of the handheld vacuum cleaner. The first part 3 and/or second part 4 may preferably be molded in plastic. Optionally, any one of the first part 3 and the second part 4 may be comprise two or more separately molded parts together forming the first part 3 and/or second part 4. In the present example illustrated in Figure 2, the second part 4 comprises two such separately molded parts. The second part 4 may (in similarity to the first part 2) have a (slightly) elongated shape and may, when the charging stand 1 is (at least almost) completely folded, extend along the first part 3 (i.e. also along the surface supporting the first part 3). The second part 4 may be arranged to support the handheld vacuum cleaner such that the longitudinal direction of the hand held vacuum cleaner is directed along (such as being substantially parallel with) the longitudinal direction of the second part 4. The hinged connection 5 may preferably be arranged to interconnect an end portion of the second part 4 to the first part 3, and preferably to an end portion of the first part 3, whereby the charging stand 1 may be substantially obscured by the handheld vacuum cleaner when the handheld vacuum cleaner is arranged in the charging stand 1.

The charging stand 1 may further comprise one or more electrical contacts 8 for electrically connecting the batteries of the handheld vacuum cleaner to a power supply, thereby enabling charging the battery of the handheld vacuum cleaner. The electrical contacts 8 may be connected to a power cord (not shown), e.g. via electric wiring, for connecting the charging stand 1 to the mains. Preferably, the electric wiring for connecting the electrical contacts 8 to the power cord may extend from the electrical contacts 8 through the second part 4 via the hinged connection 5 to the first part 3, in which the electric wiring may be connected to the power cord.

The charging stand 1 may further comprise one or more holes 13, 14 through which a fastener (such as a screw) may extend for fastening the charging stand 1 to a surface (such as a wall). Preferably, one or more holes 13 may be defined in the first part 3 and, optionally, one or more corresponding holes 14 may be defined in the second part 4. The holes 14 of the second part 4 may be aligned with the holes 13 of the first part 3, thereby allowing the fastener to extend through the holes 13, 14. When the charging stand 1 is mounted to the surface and the fastener extends through the holes 13, 14 of the first and second parts 3, 4, the second part 4 is secured to the first part by the fastener, thereby disabling relative movement between the first and second parts 3, 4.

The charging stand 1 may further comprise a recess (or compartment) 7 for storing accessory equipment 18 (such as a brush or the like) for the handheld vacuum cleaner. The recess 7 may e.g. be defined in the second part 4. A corresponding recess 17 may be defined in the first part 3 allowing the accessory equipment 18 to extend in the first and second parts 3, 4. The recess 7 may be a through hole (as illustrated in Figures 1 and 2) or a depression (not show) e.g. formed in the second part 4.

The charging stand 1 may further comprise locking means 6. The locking means 6 may comprise a toothed coupling (as illustrated in Figure 2), which may be manoeuvrable by actuating means, such as push bottom. The toothed coupling may preferably be arranged at (such as in) the hinged connection 5 between the first and second parts 3, 4. The locking means 6 are adapted to lock (or fix) the first part 3 relative to the second part 4.

Alternatively (or as a complement), the locking means may comprise a support element (such as a rod) having a first end pivotally connected to one of the first part and the second part, and a second end for supporting the other one of the first part and second part, or a friction coupling arranged at (or in) the hinged coupling (not shown).

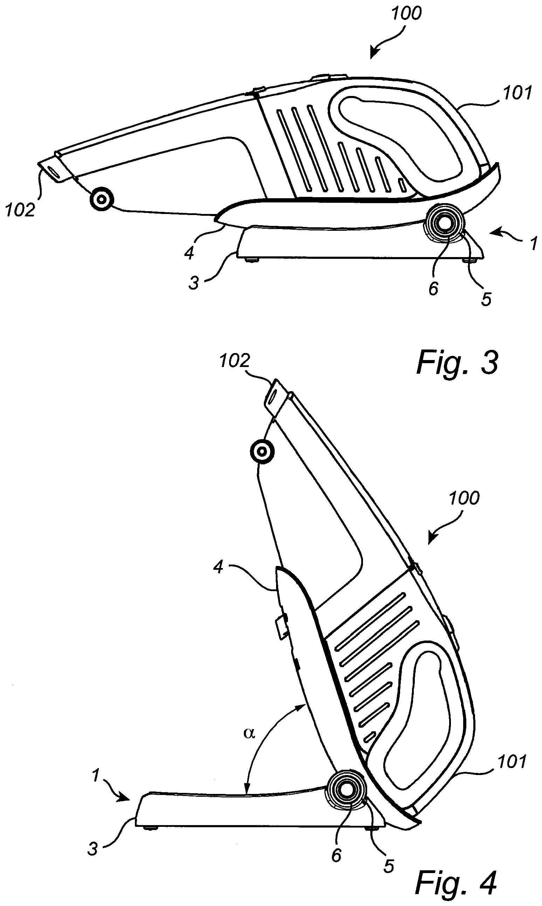

Figure 3 shows a handheld vacuum cleaner 100 arranged in the charging stand 1. Handheld vacuum cleaners are a type of portable vacuum cleaners adapted to be manoeuvred by one hand and being powered by a battery. Such handheld vacuum cleaners are suitable for vacuuming tables, furniture or other relatively small surfaces. Handheld vacuum cleaners are relatively small (having a weight of around 1 kg) compared to conventional canister vacuum cleaners or robot vacuum cleaners. The handheld vacuum cleaner 100 may have a handle 101 for manoeuvring the handheld vacuum cleaner 100 and a nozzle 102 for the purpose of taking up dust and debris from a surface to be cleaned. The present charging stand 1 may in particular be adapted to such handheld vacuum cleaners. For example, the charging stand 1 may be adapted to (e.g. by having a size suitable for) typical storage places for charging the handheld vacuum cleaner 100 (such as a table, shelf or wall).

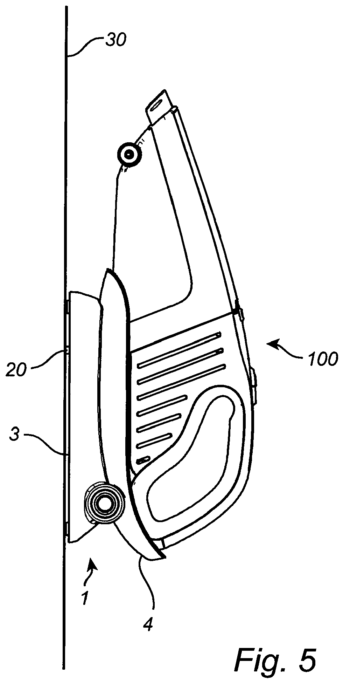

The charging stand 1 may be arrangable in a plurality of positions, in which the first and second parts 3, 4 are more or less folded together. For example, as illustrated in Figure 3, the charging stand 1 may be arrangable in a first position, in which the first part 3 has a first angle of around 0° to 30°, preferably 0° to 20°, and even more preferably 0° to 10° (such as around 0°) relative to the second part 4. The first angle may be equal to the previously described minimum angel. The first position may be used for storing (or charging) the handheld vacuum cleaner 100 in a substantially horizontal position, such as on a table, shelf or the like, in particular if the storage space has a limited height. The first position may also be used for storing the handheld vacuum cleaner 100 when the charging stand 1 is mounted to a wall (as will be described in more detail further on with reference to Figure 5).

Further, as illustrated in Figure 4, the charging stand 1 may be arrangable in a second position, in which the first part 3 has a second angle α of around 50° to 90°, preferably 60° to 85°, and even more preferably 65° to 80° (such as around 70° or 72°) relative to the second part 4. The second position may be used for storing the handheld vacuum cleaner 100 in an upright (such as substantially vertical) position, such as on a table, shelf or the like, in particular if the storage space has a limited width (in the longitudinal direction of the handheld vacuum cleaner 100). The second position may also be used for displaying the handheld vacuum cleaner 100 e.g. in a store or in a kitchen.

Further, the charging stand 1 may be arrangable in one or more intermediate positions between the first and second positions. Hence, in the intermediate positions, the angle of the first part 3 relative to the second part 4 may be any angle between the first angel and the second angel. For example, the intermediate positions may be distinctive positions (e.g. provided by the configuration of the toothed coupling) or may be selected completely freely as any position between the first and second positions.

Preferably, the locking means 6 may be arranged so as to lock the first part 3 relative to the second part 4 in the first, second and intermediate positions.

In addition to storage on a substantially planar surface, the charging stand 1 is suitable for wall mounting, as will be described with reference to Figure 5. Figure 5 shows the handheld vacuum cleaner 100 arranged in the charging stand 1, when the charging stand is mounted to a wall 30 by means of one or more fasteners 20. In the present example, the fasteners 20 may extend through the holes of the first part 3, and preferably also through the holes of the second part 4. The hook of the second part 4 may preferably be adapted to suspend the handheld vacuum cleaner 100 both in an upright position, such as when wall mounted (or when stored on a planar surface in the second position, and in a lying position (i.e. in a substantial horizontal position).

In the following, an illustrative example of an embodiment will be described.

Many products involve a stand for storage and occasionally charging of batteries. A typical example is hand vacuum cleaners.

The present example of a charging stand implements a mechanism that allows multiple positions of the product when parked in the charging stand. For example, a hand vacuum cleaner should be possible to store horizontally, vertically or several angles in between. The stand could further be prepared for wall mounting.

The present example may give flexibility for the user. Different users have different spaces available in their homes to store products with charging stand. Sometimes a small "foot print" is desired and sometimes the height of the storing space might be a limiting factor. By offering also a wall mount option the flexibility increases further.

The present example also gives a flexibility for showing the product e.g. at home or for retailers/trade/fairs etc. E.g., retailers have various shelves and display areas when presenting a handheld vacuum cleaner. By providing an adjustable charging stand the presentation of the product can be optimized given the available display area.

The present example discloses a charging stand consisting of two or more pieces that can be adjusted in relation to each other to allow the desired display angle of the product.

The joint could be any kind of friction joint or mechanical mechanism that allows freezing the stand in the desired angle. Preferably, the mechanism may be rather easy and intuitive to adjust by user by simply pulling or pushing.

While specific embodiments have been described, the skilled person will understand that various modifications and alterations are conceivable within the scope as defined in the appended claims.

## Claims

1. A charging stand (1) for a handheld vacuum cleaner (100), the charging stand comprising:
a first part (3) arranged to support the charging stand on a surface,
a second part (4) arranged to support the handheld vacuum cleaner, and
an electrical contact (8) arranged to electrically connect the handheld vacuum cleaner to a power supply,
**characterised in that** the first part and the second part are hingedly interconnected, and
**in that** the charging stand further comprises locking means (6) arranged to fix the first part relative to the second part.

2. The charging stand as defined in claim 1, wherein the first part is pivotal relative to the second part between a minimum angel of the first part relative to the second part comprised within an interval of 0° to 30°, preferably 0° to 20°, and even more preferably 0° to 10°, and a maximum angle (α) of the first part relative to the second part comprised within an interval of 50° to 90°, preferably 60° to 85°, and even more preferably 65° to 80°.

3. The charging stand as defined in claim 1 or 2, wherein the locking means are arranged to lock the second part relative to the first part in at least:
a first position, in which the first part has a first angle of around 0° to 30°, preferably 0° to 20°, and even more preferably 0° to 10° relative to the second part, and
a second position, in which the first part has a second angle (α) of around 50° to 90°, preferably 60° to 85°, and even more preferably 65° to 80° relative to the second part.

4. The charging stand as defined in claim 3, wherein the locking means are arranged to lock the second part relative to the first part in one or more intermediate positions between the first and second positions.

5. The charging stand as defined in any one of the preceding claims, wherein the first part comprises at least one hole (13) for receiving a fastener for fastening the charging stand to said surface.

6. The charging stand as defined in claim 5, wherein the second part comprises at least one hole (14) for receiving a fastener, wherein the at least one hole of the second part is aligned with the at least one hole of the first part.

7. The charging stand as defined in any one of the preceding claims, wherein the locking means comprises one or more of:
a toothed coupling, and
a support element having a first end pivotally connected to one of the first part and the second part, and a second end for supporting the other one of the first part and second part.

8. The charging stand as defined in any one of the preceding claims, further comprising a hook (9) arranged at the second part, wherein the hook is adapted to hold the handheld vacuum cleaner at the second part.

9. The charging stand as defined in claim 8, wherein the hook is arranged at substantially the same distance from the hinged connection between the first and second part as the electrical connections.

10. The charging stand as defined in any one of the preceding claims, wherein the second part comprises a sledge (10) adapted to support the handheld vacuum cleaner.

11. The charging stand as defined in any one of the preceding claims, wherein the electrical contact is arranged at a mid portion of the second part.

12. The charging stand as defined in any one of the preceding claims, wherein an end portion of the second part is hingedly connected to the first part.

13. The charging stand as defined in any one of the preceding claims, further comprising a recess (7, 17) formed in the second and/or first part for storing accessory equipment (18) for the handheld vacuum cleaner.

14. The charging stand as defined in any one of the preceding claims, wherein the electrical contact is integrated in the second part.

15. The charging stand as defined in any one of the preceding claims, wherein the second part is adapted to support the handheld vacuum cleaner on a side of the second part facing away from the first part when the first and second part are folded together.

## Patentansprüche

1. Ladestation (1) für einen Handstaubsauger (100), wobei die Ladestation Folgendes umfasst:
ein erstes Teil (3), das ausgelegt ist, die Ladestation auf einer Oberfläche zu halten,
ein zweites Teil (4), das ausgelegt ist, den Handstaubsauger zu halten, und
einen elektrischen Kontakt (8), der ausgelegt ist, den Handstaubsauger mit einer Leistungsquelle elektrisch zu verbinden,
**dadurch gekennzeichnet, dass**
das erste Teil und das zweite Teil über ein Scharnier miteinander verbunden sind, und
dass die Ladestation ferner Einrastmittel (6) umfasst, die ausgelegt sind, das erste Teil in Bezug auf das zweite Teil zu fixieren.

2. Ladestation nach Anspruch 1, wobei das erste Teil in Bezug auf das zweite Teil zwischen einem minimalen Winkel des ersten Teils in Bezug auf das zweite Teil, der in einem Bereich von 0° bis 30°, vorzugsweise im Bereich von 0° bis 20°, und noch stärker bevorzugt im Bereich von 0° bis 10° enthalten ist, und einem maximalen Winkel (α) des ersten Teils in Bezug auf das zweite Teil, der in einem Bereich von 50° bis 90°, bevorzugt im Bereich von 60° bis 85°, und noch stärker bevorzugt im Bereich von 65° bis 80° liegt, geschwenkt werden kann.

3. Ladestation nach Anspruch 1 oder 2, wobei die Einrastmittel ausgelegt sind, das zweite Teil in Bezug auf das erste Teil in wenigstens einer der folgenden Positionen einrasten zu lassen:
einer ersten Position, in der das erste Teil einen ersten Winkel im Bereich von etwa 0° bis 30°, bevorzugt im Bereich von 0° bis 20° und noch stärker bevorzugt im Bereich von 0° bis 10° in Bezug auf das zweite Teil aufweist, und
einer zweiten Position, in der das erste Teil einen zweiten Winkel (α) im Bereich von etwa 50° bis 90°, bevorzugt im Bereich von 60° bis 85°, und noch stärker bevorzugt im Bereich von 65° bis 80° in Bezug auf das zweite Teil aufweist.

4. Ladestation nach Anspruch 3, wobei die Einrastmittel so ausgelegt sind, dass sie das zweite Teil in Bezug auf das erste Teil in eine oder mehrere Zwischenpositionen zwischen der ersten und der zweiten Position einrasten lassen.

5. Ladestation nach einem der vorhergehenden Ansprüche, wobei das erste Teil wenigstens ein Loch (13) zum Aufnehmen eines Befestigungselements zum Befestigen der Ladestation an der Oberfläche umfasst.

6. Ladestation nach Anspruch 5, wobei das zweite Teil wenigstens ein Loch (14) zum Aufnehmen eines Befestigungselements umfasst, wobei das wenigstens eine Loch des zweiten Teils auf das wenigstens ein Loch des ersten Teils ausgerichtet ist.

7. Ladestation nach einem der vorhergehenden Ansprüche, wobei die Einrastmittel eines oder mehrere der folgenden Elemente umfassen:
eine verzahnte Kopplung, und
ein Halteelement, das ein erste Ende, das mit dem einen des ersten Teils und des zweiten Teils schwenkbar verbunden ist, und ein zweites Ende zum Halten des jeweils anderen des ersten Teils und des zweiten Teils aufweist.

8. Ladestation nach einem der vorhergehenden Ansprüche, die ferner einen Haken (9) umfasst, der an dem zweiten Teil angeordnet ist, wobei der Haken ausgelegt ist, den Handstaubsauger an dem zweiten Teil zu halten.

9. Ladestation nach Anspruch 8, wobei der Haken im Wesentlichen im gleichen Abstand von der Scharnierverbindung zwischen dem ersten und zweiten Teil wie die elektrischen Verbindungen angeordnet ist.

10. Ladestation nach einem der vorhergehenden Ansprüche, wobei das zweite Teil einen Schlitten (10) enthält, der ausgelegt ist, den Handstaubsauger zu halten.

11. Ladestation nach einem der vorhergehenden Ansprüche, wobei der elektrische Kontakt in einem mittleren Abschnitt des zweiten Teils angeordnet ist.

12. Ladestation nach einem der vorhergehenden Ansprüche, wobei ein Endabschnitt des zweiten Teils mit dem ersten Teil über ein Scharnier verbunden ist.

13. Ladestation nach einem der vorhergehenden Ansprüche, die ferner eine Vertiefung (7, 17) umfasst, die in dem zweiten und/oder ersten Teil ausgebildet ist, um Zubehör (18) für den Handstaubsauger aufzubewahren.

14. Ladestation nach einem der vorhergehenden Ansprüche, wobei der elektrische Kontakt in das zweite Teil integriert ist.

15. Ladestation nach einem der vorhergehenden Ansprüche, wobei das zweite Teil so ausgelegt ist, dass es den Handstaubsauger auf einer Seite des zweiten Teils, die von dem ersten Teil weg zeigt, hält, wenn das erste Teil und das zweite Teil zusammengeklappt sind.

## Revendications

1. Socle de charge (1) pour un aspirateur portable (100), ce socle de charge comprenant :
une première partie (3) agencée de façon à supporter le socle de charge sur une surface,
une deuxième partie (4) agencée de façon à supporter l'aspirateur portable, et
un contact électrique (8) agencé de façon à connecter électriquement l'aspirateur portable à une alimentation électrique,
**caractérisé en ce que** la première partie et la deuxième partie sont reliées de manière articulée,
et **en ce que** le socle de charge comprend en outre un moyen de verrouillage (6) agencé de façon à fixer la première partie par rapport à la deuxième partie.

2. Socle de charge selon la revendication 1, dans lequel la première partie est pivotante par rapport à la deuxième partie entre un angle minimum de la première partie par rapport à la deuxième partie compris dans un intervalle de 0° à 30°, de préférence de 0° à 20°, et idéalement de 0° à 10°, et un angle maximum (α) de la première partie par rapport à la deuxième partie compris dans un intervalle de 50° à 90°, de préférence de 60° à 85°, et idéalement de 65° à 80°.

3. Socle de charge selon la revendication 1 ou 2, dans lequel le moyen de verrouillage est agencé de façon à verrouiller la deuxième partie par rapport à la première partie dans au moins :
une première position, dans laquelle la première partie a un premier angle d'environ 0° à 30°, de préférence de 0° à 20°, et idéalement de 0° à 10° par rapport à la deuxième partie, et
une deuxième position, dans laquelle la première partie a un deuxième angle (α) d'environ 50° à 90°, de préférence de 60° à 85°, et idéalement de 65° à 80° par rapport à la deuxième partie.

4. Socle de charge selon la revendication 3, dans lequel le moyen de verrouillage est agencé de façon à verrouiller la deuxième partie par rapport à la première partie dans une ou plusieurs positions intermédiaires entre la première et la deuxième position.

5. Socle de charge selon l'une quelconque des revendications précédentes, dans lequel la première partie comporte au moins un trou (13) pour recevoir une pièce de fixation pour fixer le socle de charge à ladite surface.

6. Socle de charge selon la revendication 5, dans lequel la deuxième partie comporte au moins un trou (14) pour recevoir une pièce de fixation, cet au moins un trou de la deuxième partie étant aligné avec l'au moins un trou de la première partie.

7. Socle de charge selon l'une quelconque des revendications précédentes, dans lequel le moyen de verrouillage comporte un ou plusieurs des éléments suivants :
un accouplement denté, et
un élément de support ayant une première extrémité reliée de manière pivotante à soit la première partie, soit la deuxième partie, et une deuxième extrémité pour supporter l'autre que la première partie ou la deuxième partie.

8. Socle de charge selon l'une quelconque des revendications précédentes, comprenant en outre un crochet (9) disposé au niveau de la deuxième partie, ce crochet étant adapté de façon à maintenir l'aspirateur portable au niveau de la deuxième partie.

9. Socle de charge selon la revendication 8, dans lequel le crochet est disposé essentiellement à la même distance de la liaison articulée entre la première et la deuxième partie que les connexions électriques.

10. Socle de charge selon l'une quelconque des revendications précédentes, dans lequel la deuxième partie comporte une nacelle (10) adaptée de façon à supporter l'aspirateur portable.

11. Socle de charge selon l'une quelconque des revendications précédentes, dans lequel le contact électrique est disposé au niveau d'une partie médiane de la deuxième partie.

12. Socle de charge selon l'une quelconque des revendications précédentes, dans lequel une partie extrême de la deuxième partie est reliée de manière articulée à la première partie.

13. Socle de charge selon l'une quelconque des revendications précédentes, comportant en outre un évidement (7, 17) formé dans la deuxième et/ou la première partie pour y ranger un matériel accessoire (18) pour l'aspirateur portable.

14. Socle de charge selon l'une quelconque des revendications précédentes, dans lequel le contact électrique est intégré dans la deuxième partie.

15. Socle de charge selon l'une quelconque des revendications précédentes, dans lequel la deuxième partie est adaptée de façon à supporter l'aspirateur portable sur un côté de la deuxième partie tourné vers l'extérieur relativement à la première partie lorsque la première partie et la deuxième partie sont repliées ensemble.
